# EUROPEAN PATENT APPLICATION

(11) **EP 4 851 835 A1**
(43) Date of publication of application: **09.12.2026**
(21) Application number: 26183390.9
(22) Date of filing: 05.06.2026
(51) Int. Cl.: G06F 21/32, H04L 9/00, H04L 9/32, H04L 9/40

(54) **A UNIFIED SYSTEM AND METHOD FOR THE SECURE VALIDATION OF DIGITAL TRANSACTIONS USING MULTIFACTORIAL BIOMETRIC AUTHENTICATION**

(30) Priority: 06.06.2025 PT 2025120325
(71) Applicant: NOS Inovação, SA, 4460-191 Porto (PT); Marques Almeida de Laffitte, Frederico, 2615-200 Alverca do Ribatejo (PT)
(72) Inventor: MARQUES ALMEIDA DE LAFFITTE, Frederico, 2615-200 Alverca Do Ribatejo (PT)
(74) Representative: do Nascimento Gomes, Rui

(57) **Abstract**

A system for the secure validation of digital transactions is disclosed. It comprises an Identification Module (10) for capturing a user's primary biometric data and contextual metadata, while also performing liveness detection tests. An Adaptive Authentication Module (20) receives this data and applies artificial intelligence models to calculate a trust score against a configurable threshold. Upon successful authentication, a Dynamic Authorization Module (30) authorizes the transaction and grants specific permissions based on the trust score. A Cryptographic Signature Generation Module (40) is then activated to generate a first hash of the digital content and a multifactorial digital signature, which creates an inseparable cryptographic link between the user's authenticated identity, the content's hash, and the contextual metadata. Finally, a Secure Storage Module (60) records the signature and associated data in an immutable ledger, ensuring the integrity and non-repudiation of the transaction. A method for operating the aforementioned system is also disclosed.

## Description

### TECHINCAL FIELD

The present disclosure is enclosed in the field of information security, more specifically in systems for ensuring the end-to-end integrity and authenticity of digital transactions.

### PRIOR ART

Currently, digital processes related to the signature and authentication of electronic documents and digital communications face significant challenges in terms of security, vulnerability to fraud, and difficulty in validating the subscriber's identity and the integrity of the content. Traditional solutions based exclusively on passwords or digital certificates exhibit critical limitations, rendering them vulnerable to advanced attacks or malicious manipulations.

The existing solutions have the issue of being susceptible to fraud and failing to provide a robust, dynamic, and context-aware link between a user's identity and a specific digital transaction.

Consequently, there is a need for a solution that overcomes these drawbacks by providing a unified and secure framework for validating the authenticity and integrity of digital actions.

### SUMMARY OF THE DISCLOSURE

It is an object of the present disclosure to provide a system and method that overcomes the aforementioned limitations. This object is primarily achieved by a multifactorial system for the secure validation of digital transactions. Said system is characterized by comprising a set of modules that are operatively interconnected. In particular, the system comprises an Identification Module, an Adaptive Authentication Module, a Dynamic Authorization Module, a Cryptographic Signature Generation Module and a Secure Storage Module.

The Identification Module is configured to capture primary biometric data and contextual metadata and perform liveness detection tests; the Adaptive Authentication Module is configured to receive the biometric data, contextual metadata and the results of the liveness detection tests, and to apply artificial intelligence models to calculate a trust score against a configurable threshold. In its turn, the Dynamic Authorization Module is configured to authorize the digital transaction only when the trust score exceeds the configurable threshold and to grant specific permissions based on said score. The Cryptographic Signature Generation Module, activated upon authorization, is configured to generate a first cryptographic hash of the content and a multifactorial digital signature that binds the first hash to the user's authenticated identity and the contextual metadata; and the Secure Storage Module is configured to record the digital signature and associated data in an immutable ledger.

By integrating these particular set of computational modules, the system of the present disclosure is able to provide a unified technical solution to the problem of ensuring the end-to-end trustworthiness of a digital transaction. More particularly, the system achieves this effect by creating a single, inseparable cryptographic link between a user's verified identity, the context-based authorization for a specific digital transaction, and the integrity of the associated digital content, thus providing a holistic and robust validation mechanism.

In an advantageous configuration of the system, the contextual metadata captured by the Identification Module may include GPS geolocation, IP address, device type and status, and the presence of nearby devices. By considering this type of metadata, a better mode of contextual validation is provided, which strengthens the trust score calculation.

In another advantageous configuration of the system, the Cryptographic Signature Generation Module may be further configured to generate a second cryptographic hash, which is derived from a combination of validated biometric data and contextual metadata. This second hash thereby acts as a unique identifier for the authentication session and is associated with the generated digital signature.

It is also an object of the present disclosure a unified method for the secure validation of digital transactions, based on the aforementioned system.

### DESCRIPTION OF FIGURES

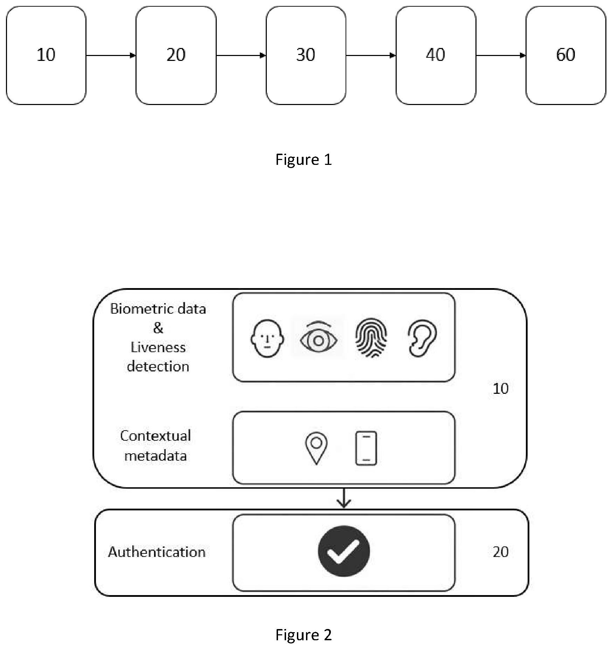

Figure 1 illustrates a block diagram of the operational flow of the system's core functional modules. In particular, it depicts the sequential interconnection between the Identification Module (10), the Adaptive Authentication Module (20), the Dynamic Authorization Module (30), the Cryptographic Signature Generation Module (40), and the Secure Storage Module (60).
Figure 2 is a block diagram representation illustrating the operational interconnection between the Identification Module (10) and the Adaptive Authentication Module (20). In particular, it is depicted the capture of multifactorial biometric data and additional contextual metadata, and the subsequent analysis that leads to a confirmed user's identity and authentication.

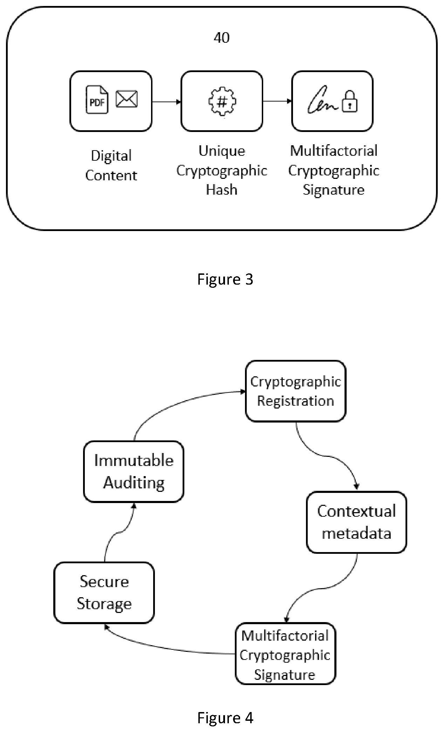

Figure 3 is a block diagram representation of the operational flow of the Cryptographic Signature Generation Module (40). It illustrates the process of generating a unique cryptographic hash from the original digital content and the creation of the multifactorial cryptographic signature that binds said hash to the user's authenticated identity, thereby ensuring content integrity and authenticity.
Figure 4 is a schematic representation of the secure validation process implemented by the system and method herein described. In particular, it depicts the continuous cycle of secure storage at the Secure Storage Module (60), cryptographic registration, and immutable auditing of the transaction, and how the signature and its associated contextual data are permanently recorded.

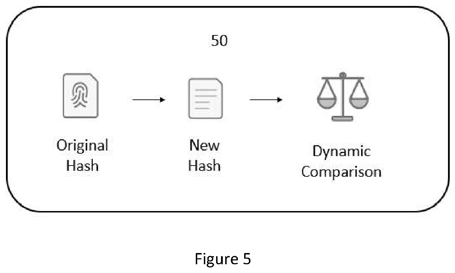

Figure 5 is a schematic representation of the Continuous Validation process implemented by the Continuous Validation Module (50), which depicts a dynamic comparison between a newly calculated hash of the content and the original hash retrieved from the immutable ledger, thereby allowing to verify the integrity of the content at any point in time.

### DETAILED DESCRIPTION

The more general configurations of the present disclosure are described in the Summary of the disclosure. Such configurations are detailed below in accordance with other advantageous and/or preferred embodiments of implementation of the present disclosure.

The present disclosure relates to a system and a method for providing end-to-end trustworthiness for digital transactions.

This is achieved through a holistic architecture where several functional modules are not merely sequential but are synergistically integrated to create an inseparable cryptographic link between a verified user and a specific digital transaction. The following description details each of the constituent modules and their interdependencies, wherein the respective operations should be considered part of a specific operational framework designed to achieve the proposed objectives. In particular, the identification, authorization, and signature generation operations should not be viewed as isolated or independent, but rather as sequential operations that define the unified validation mechanism described herein.

For the purpose of the present disclosure, a "Digital Transaction" refers to any indivisible digital event that requires authenticity, integrity, and non-repudiation, such as the act of signing a digital document, authorizing a financial transfer, or sending a secure electronic communication. Therefore, a digital transaction may be defined by a unique combination comprised of an actor (the user), an action (the authorization), and an object (the digital content).

In addition, the term "Unified" is used herein to describe an architecture where the constituent modules are functionally inseparable, wherein the claimed technical effects are only achieved through the specific, interdependent operation of said modules, that is, removing any of the modules would render the system incapable of achieving its intended purpose.

The system and method object of the present disclosure are particularly applicable, but not limited, to the secure authentication of legal, financial, medical, and governmental documents, as well as in sensitive digital communications within corporate and governmental environments. The proposed solution ensures a significantly higher level of security than existing systems and methods, providing robustness against fraud, ease of auditing, and continuous verification of the authenticity and integrity of digitally signed content.

For that purpose, in a preferred aspect of the present disclosure, the system architecture comprises several interconnected modules (10, 20, 30, 40, 50, 60), which may be implemented on client devices, such as smartphones or desktops, and servers, thereby enabling both online and offline operation. Each of the modules that can form part of the system, along with their possible variants, will be described in detail below.

In a preferred embodiment of the system, it is comprised by an Identification Module (10), an Adaptative Authentication Module (20), a Dynamic Authorization Module (30), a Cryptographic Signature Generation Module (40) and a Secure Storage Module (60).

The Identification Module (10) is configured to capture initial, essential data to establish a user's claimed identity, with a high degree of confidence.

Particularly, in one embodiment, the Identification Module (10) may be configured to capture multiple data points, beginning with one or more primary biometric identifiers, for example facial geometry, fingerprint patterns, voiceprints, or iris scans. In one embodiment, these data may be acquired by sensors integrated into a user's device.

In addition, to capturing static biometrics, the module (10) may also perform critical liveness detection to actively distinguish a live user from a fraudulent representation, such as a photo, video, or synthetic voice. In an embodiment, this is achieved by executing dynamic tests, which may include requiring ocular movement, tracking changes in facial expression, or verifying responses to randomized visual or auditory prompts, thereby ensuring the captured biometrics originate from a physically present human.

To complete the contextual picture, the module (10) may also be configured to collect a set of environmental and technical metadata to form a contextual snapshot of the identification event. This metadata includes, but is not limited to, precise GPS geolocation, the user device's IP address, device-specific information such as its model, operating system version, and sensor status, the presence and identity of nearby trusted devices via Bluetooth or Wi-Fi discovery, and ambient conditions, for example light levels or background noise.

Regarding the Adaptative Authentication Module (20), it is configured to receive the complete set of data from the Identification Module (10) in order to perform a robust, intelligent authentication.

In one embodiment, the Adaptative Authentication Module (20) performs this dynamic assessment by employing pre-trained artificial intelligence models designed to compare the captured biometric data, the results of the liveness detection tests, and the set of contextual metadata against a securely stored user reference profile.

In one embodiment, the trained artificial intelligence model is a neural network, which is trained to receive a normalized feature vector composed of the various data points (biometric match score, liveness score, contextual anomaly score) and to output a single confidence value.

In addition, a user reference profile may be created during an initial enrolment phase and may relate to a data structure that comprises at least: a) a biometric template, such as a mathematical vector representing the features of the user's face or fingerprint; and b) a set of historical contextual patterns, which includes, for example, frequently used geographical locations, common device identifiers, and typical transaction times. This reference profile may be continuously and securely updated after each successful authentication, allowing the system to learn and adapt to the user's normal behaviour patterns over time.

Therefore, in the context of the present disclosure, the term "adaptive" used to qualify the Adaptative Authentication Module (20) may refer to the following: firstly, the ability to dynamically adjust the configurable threshold against which the trust score is compared, based on the transaction's sensitivity, i.e., a risk level associated with the transaction; and secondly, the ability of the module to refine its contextual consistency analysis over time by continuously updating the user reference profile with data from new, successful authentications.

The authentication process implemented by the module (20) is further conditional upon receiving a successful result from the liveness detection tests, which serves as a gatekeeper against spoofing attacks before any further analysis is conducted. Furthermore, the module (20) may also perform a contextual consistency analysis by evaluating the captured contextual metadata against the user's historical patterns to determine, for example, if the user is in a typical location, if the device is familiar, or if nearby associated users are also present. This process creates a network of trust, analogous to a distributed Merkle tree where each authenticated interaction strengthens mutual verification. Instead of a simple pass/fail result, the module (20) may be projected to calculate a weighted "trust score", which is a numerical representation of the confidence level in the user's identity for that specific context. The weighting of different factors can be dynamically adjusted, and ff the calculated score exceeds a preconfigured or dynamically adjusted threshold, which may be based on the transaction's sensitivity, the user is authenticated.

Upon a successful authentication from the Adaptative Authentication Module (20), the Dynamic Authorization Module (30) is configured to determine the precise scope of the digital transaction the user is permitted to execute. For example, to achieve this, the Adaptive Authentication Module (20), upon successful authentication, may generate a short-lived, cryptographically signed authentication assertion, for example a JSON Web Token (JWT). This assertion securely encapsulates the user's identifier, the calculated trust score, and the granted authentication level. This assertion may constitute the "user's authenticated identity" that is consumed by subsequent modules.

In particular, the Dynamic Authorization Module (30) is configured to enforce pre-defined policies, such as organizational rules or transaction limits, and to use the trust score and real-time contextual factors, for instance the time of day or network type, to grant specific permissions. This ensures that the authorization is tailored to the specific risk profile of the moment, for example by granting full signing permissions for a high trust score while only permitting read-only access for a lower, albeit still passing, score.

The core of the system is a Cryptographic Signature Generation Module (40), where the cryptographic link is established.

More particularly, once the transaction is authorized the module (40) generates a first cryptographic hash, for example using the SHA-256 algorithm, of the digital content itself. As used herein, 'digital content' refers to any specific payload of data that constitutes the object of the digital transaction, encompassing, for example, a complete document file, a set of data fields defining a financial transfer, or the body of an electronic communication. This hash serves as a unique digital fingerprint of the digital content.

In another embodiment, the Cryptographic Signature Generation Module (40) may generate a second, distinct cryptographic hash, derived from the combination of the validated biometric data and the contextual metadata from the successful authentication event. This second hash serves as a unique fingerprint of the entire authentication context.

Finally, the module (40) generates a single, multifactorial digital signature which cryptographically binds the data representing the user's authenticated identity as received from the valid authentication assertion, to the first hash and the second hash. This creates the unified, tamper-evident record of the digital transaction.

To provide a secure and permanent foundation for the system, a Secure Storage Module (60) is provided. This module (60) is configured to record all data associated with the transaction, including the multifactorial signature, the hashes, and the contextual metadata, using strong encryption. To prevent retroactive alteration, this data is recorded in an immutable ledger, which in a preferred embodiment is a private or permissioned blockchain or another cryptographically protected, append-only database. The module (60) also provides a secure audit trail and can be configured to automatically generate alerts for suspicious activities.

In another preferred embodiment, the system may further comprise a Continuous Validation Module (50), to allow any authorized party to verify the integrity and authenticity of a completed digital transaction at any point in the future.

The module (50) is configured to recalculate a new hash from the current version of the digital content, retrieve the original first hash associated with the recorded multifactorial signature, and compare the two hashes. A match confirms the content is authentic and has not been altered, whereas a mismatch provides definitive proof of tampering.

The present disclosure also relates to a method for securely validating a digital transaction, which is implemented by the unified system architecture already described, and comprises several interdependent steps designed to create an inseparable and auditable link between a user, a context, and a specific digital content.

The method begins with an initial identification step, wherein primary biometric data from a user and contextual metadata are captured via the Identification Module (10). This capture is performed in conjunction with the execution of liveness detection tests, which are designed to confirm that a user is a live human present at the moment of the transaction. These liveness detection tests may include, but are not limited to, analyzing ocular movement, detecting and analyzing changes in facial expression, or verifying a user's response to randomized visual or auditory instructions.

Following the initial identification step, the method proceeds with a step of receiving, at the Adaptive Authentication Module (20), the captured biometric data, the results of the liveness detection tests, and a set of contextual metadata associated with the user and the transaction environment. In a preferred embodiment, the step of receiving contextual metadata explicitly includes capturing at least one of: the user's precise GPS geolocation, the IP address of the device being used, the type and status of the device, the presence of any nearby trusted devices as detected via Bluetooth or Wi-Fi, and the ambient environmental conditions.

Subsequently, one or more artificial intelligence models may be applied to this combined set of biometric, liveness, and contextual data to calculate a trust score, which is based on a weighted combination of all factors evaluated against a configurable threshold. In a particularly preferred embodiment, this analysis step further comprises analyzing the presence of and correlation between nearby or frequently associated users, thereby constructing a cross-reference network between trusted identities to further strengthen the trust score calculation.

Once the trust score is calculated, the method proceeds to a dynamic authorization step, performed by the Dynamic Authorization Module (30), which authorizes the digital transaction only if said trust score exceeds the configurable threshold. This authorization step includes enforcing pre-defined policies and using the trust score and real-time contextual factors to grant specific permissions tailored to the risk profile of the moment. To adapt to varying levels of risk, the method may further comprise the step of dynamically adjusting this configurable threshold based on the risk level of the digital transaction to be performed.

Upon successful authorization, the method proceeds to the core step of generating, via the Cryptographic Signature Generation Module (40), a first cryptographic hash of the digital content to be signed, and thereafter generating a multifactorial digital signature. This signature is specifically configured to create an inseparable cryptographic link between the first cryptographic hash, the user's now-authenticated identity, and the contextual metadata that led to the successful authorization.

In a particularly advantageous embodiment, the step of generating the signature further comprises generating a second cryptographic hash, which is derived from a combination of the validated biometric data and the contextual metadata. This second hash is designed to act as a unique identifier for the specific authentication session and is itself cryptographically bound within the multifactorial digital signature.

The final step in the primary sequence of the method is the recording, in the secure storage module (60), of the completed multifactorial digital signature and all its associated data into an immutable ledger, thereby ensuring the permanence, integrity, and non-repudiation of the digital transaction.

To provide for long-term security and verification, the method further provides for a subsequent validation step, performed by the Continuous Validation Module (50), which can be performed at any time after the transaction is recorded. This validation step comprises recalculating a new hash of the content at that later time, retrieving the recorded first cryptographic hash from the immutable ledger, and comparing the new hash with the recorded first cryptographic hash to validate the integrity of the content.

Furthermore, to ensure continuous security and oversight, the method may further comprise the step of maintaining a complete and auditable log of all digital transactions and automatically generating an alert in response to detecting a suspicious activity.

## Claims

1. A unified system for the secure validation of digital transactions, **characterised in that** it comprises:
- An Identification Module (10) configured to i.) capture primary biometric data from a user; ii.) perform liveness detection tests to confirm that the user is a live human present; and iii.) capture contextual metadata associated with the digital transaction;
- an Adaptive Authentication Module (20), operably connected to the Identification Module (10), configured to receive said biometric data, contextual metadata and the results of the liveness detection tests, and further configured to apply one or more artificial intelligence models to calculate a trust score based on a weighted combination of all received data against a configurable threshold;
- a Dynamic Authorization Module (30), configured to authorize the digital transaction only when the trust score calculated by the Adaptative Authentication Module (20) exceeds the configurable threshold, and further configured to grant specific permissions based on said trust score and pre-defined policies;
- Cryptographic Signature Generation Module (40), activated upon authorization from the Dynamic Authorization Module (30), configured to generate a first cryptographic hash of a digital content and to generate a multifactorial digital signature that creates an inseparable cryptographic link between the first cryptographic hash, the user's authenticated identity, and the contextual metadata; and
- a Secure Storage Module (60) configured to record in an immutable ledger, data associated with the digital transaction, including the multifactorial digital signature, cryptographic hashes and contextual metadata.

2. The system according to claim 1, wherein the contextual metadata captured by the Identification Module (10) includes at least one of: GPS geolocation, IP address, device type, device operational status, presence of nearby trusted devices detected via Bluetooth or Wi-Fi, and ambient environmental conditions.

3. The system according to claim 1 or 2, wherein the Adaptive Authentication Module (20) is further configured to dynamically adjust the configurable threshold based on the sensitivity and/or value of the digital transaction to be performed.

4. The system according to any of the previous claims, wherein the Cryptographic Signature Generation Module (40) is further configured to generate a second cryptographic hash derived from a combination of the validated biometric data and the contextual metadata, wherein said second hash acts as a unique identifier for the authentication session and is cryptographically bound within the multifactorial digital signature.

5. The system according to any of the previous claims, wherein the Secure Storage Module (60) comprises a private or permissioned blockchain, or another cryptographically protected, append-only database.

6. The system according to any of the previous claims, wherein the liveness detection tests performed by the Identification Module (10) include at least one of: analysis of ocular movement, analysis of changes in facial expression, or verification of a response to randomized visual or auditory instructions.

7. The system according to any of the previous claims, wherein the Adaptive Authentication Module (20) is further configured to analyze the presence of and correlation between nearby or frequently associated users in order to construct a cross-reference network between trusted identities; the module (20) being further configured to calculate the trust score based on the results of this analysis.

8. The system according to any of the preceding claims, further comprising a Continuous Validation Module (50) configured to, at any time after a digital transaction is recorded in the Secure Storage Module (60), validate the integrity of the respective digital content by recalculating a new cryptographic hash of said content and comparing it with the first cryptographic hash retrieved from the Secure Storage Module (60).

9. A unified method for the secure validation of digital transactions, **characterised in that** it comprises the steps of:
a. identifying a user, via an Identification Module (10), by capturing primary biometric data, performing liveness detection tests to confirm the user is a live human present, and capturing contextual metadata associated with the digital transaction;
b. authenticating the user at an Adaptive Authentication Module (20), by receiving said biometric data, the results of the liveness detection tests, and said contextual metadata from the Identification Module (10), and applying one or more artificial intelligence models to calculate a trust score based on a weighted combination of the received data against a configurable threshold;
c. authorizing, via a Dynamic Authorization Module (30), the digital transaction only when said trust score exceeds the configurable threshold, said authorization including the granting of specific permissions based on the trust score and pre-defined policies;
d. generating, via a Cryptographic Signature Generation Module (40) and upon said authorization, a first cryptographic hash of a digital content and a multifactorial digital signature that creates an inseparable cryptographic link between the first cryptographic hash, the user's authenticated identity, and the contextual metadata; and
e. recording in an immutable ledger, via a Secure Storage Module (60), data associated with the digital transaction, including the multifactorial digital signature, cryptographic hashes and contextual metadata.

10. The method according to claim 9, wherein the step of capturing contextual metadata includes capturing at least one of: GPS geolocation, IP address, device type, device operational status, presence of nearby trusted devices detected via Bluetooth or Wi-Fi, and ambient environmental conditions.

11. The method according to any of claims 9 to 10, further comprising the step of dynamically adjusting, via the Adaptive Authentication Module (20), the configurable threshold based on the sensitivity and/or value of the digital transaction.

12. The method according to any of claims 9 to 11, wherein the step of generating a multifactorial digital signature further comprises generating a second cryptographic hash derived from a combination of the validated biometric data and the contextual metadata to act as a unique identifier for the authentication session, and cryptographically binding said second hash within the signature.

13. The method according to any of claims 9 to 12, wherein the step of performing liveness detection tests includes analyzing at least one of: ocular movement, changes in facial expression, or a response to randomized visual or auditory instructions.

14. The method according to any of claims 9 to 13, wherein the step of calculating a trust score further comprises analyzing the presence of and correlation between nearby or frequently associated users to construct a cross-reference network between trusted identities.

15. The method according to any of claims 9 to 14, further comprising a subsequent validation step, performed by a Continuous Validation Module (50), including the steps of:
- recalculating a new hash of the digital content;
- retrieving the recorded first cryptographic hash from the immutable ledger; and
- comparing the new hash with the recorded first cryptographic hash to validate the integrity of the content.
